# DEMANDE DE BREVET EUROPEEN

(11) **EP 2 136 282 A2**
(43) Date de publication de la demande: **23.12.2009**
(21) Numéro de dépôt: 09173388.1
(22) Date de dépôt: 19.10.2009
(51) Int. Cl.: G06F 1/16

(54) **Sabot d'adaptation pour appareil électronique nomade**

(71) Demandeur: Technomobile, 93600 Aulnay-Sous-Bois (FR)
(72) Inventeur: Bessad, Salem, 93290 Tremblay en France (FR)
(74) Mandataire: Kohn, Philippe

(57) **Abrégé**

La présente invention concerne un sabot de connexion à un appareil électronique nomade (1).

Le sabot (2) comporte des moyens (8-10) permettant sa solidarisation permanente et amovible à l'appareil électronique nomade (1), ainsi qu'un connecteur (11) permettant la connexion d'un câble de connexion entre le sabot (2) et une station d'accueil comme un ordinateur fixe.

## Description

La présente invention concerne un sabot d'adaptation pour un appareil électronique nomade comme un téléphone mobile ou un assistant personnel de données PDA.

Dans l'état de la technique, il est connu d'utiliser des petits appareils portatifs comme des téléphones mobiles ou encore comme des assistants personnels de données qui se tiennent dans la main et qui comportent essentiellement un écran et un dispositif d'interaction avec l'utilisateur pour exécuter un certain nombre de tâches informatiques comme la saisie de données ou l'exécution d'une communication sur un réseau de communication.

Ce type d'appareil portable est souvent équipé de mémoire, notamment, et de moyens de calcul et de traitement local qui, avantageusement, coopèrent avec une station fixe comme un ordinateur personnel.

A cette fin, il est connu de munir l'appareil électronique nomade d'un connecteur, par exemple, de type USB, et particulièrement de type USB min, de sorte qu'un câble permet de connecter l'appareil électronique nomade avec un connecteur convenable USB de l'ordinateur d'accueil.

Cette disposition permet alors d'exécuter les applications depuis l'ordinateur d'accueil de manière, par exemple, pour charger ou pour décharger une partie des mémoires de l'appareil électronique nomade.

Dans cet état de la technique, on s'est aperçu que le connecteur sur le téléphone mobile, ou plus généralement sur un appareil électronique nomade, subissait des contraintes mécaniques importantes lors de la connexion et la déconnexion et qu'il en résultait des défaillances qui, par exemple, sur un lot de téléphones mobiles gérés dans une Entreprise, engendraient des taux d'indisponibilité et des coûts de réparation préjudiciables.

La présente invention apporte remède à ces inconvénients de l'état de la technique.

Dans un autre état de la technique, il est connu de disposer d'une station d'accueil ou « docking station », qui est connectée par un câble convenable à un ordinateur fixe et qui comporte un réceptacle équipé d'un connecteur destiné à s'adapter avec le connecteur d'un appareil portable ou mobile comme un téléphone mobile.

Lorsque l'appareil mobile est disposé dans le réceptacle de la station d'accueil, les deux connecteurs respectivement sur le téléphone, d'une part, et sur la station d'accueil, d'autre part, s'engagent l'un l'autre et il est alors possible, d'une part, d'exécuter une liaison entre le téléphone mobile et l'ordinateur fixe et/ou, d'autre part, d'exécuter une opération d'alimentation ou de recharge d'accumulateurs portés par le téléphone mobile.

Cependant, dans cet état de la technique, l'insertion/désinsertion du téléphone mobile sur la station d'accueil entraîne un problème relativement proche de celui précité, dans lequel la connexion entre les deux connecteurs peut amener des inconvénients mécaniques.

Il s'en suit aussi un certain taux d'indisponibilité et un coût de réparation.

Par ailleurs, la station d'accueil est très souvent réservée à un seul type d'appareil mobile et occupe de l'espace sur l'espace de travail associé avec l'ordinateur fixe.

Dans le document US-A-7,280,802, il a été décrit un système servant à la fois de transmetteur en modulation de fréquence et de chargeur et/ou alimentation pour un lecteur de fichiers MP3 qui utilise une station d'accueil et un câble de liaison à un ordinateur.

Dans cet état de la technique, l'appareil électronique nomade n'est en relation avec la station que lorsqu'il faut que l'ordinateur prenne le contrôle à l'aide d'une application spécialisée du lecteur de fichiers MP3.

En particulier, un tel appareil est fréquemment connecté et déconnecté à chaque fois que l'utilisateur veut par exemple changer des fichiers MP3 qui y sont implantés.

Par contre, lorsque l'appareil portable est utilisé en mode nomade, il est séparé de la station d'accueil qui, elle, reste en permanence liée par un câble à la station de travail ou ordinateur personnel.

Dans le document EP-A-2.034.616, il est décrit un adaptateur pour un lecteur de fichiers MP3 dans un mode de réalisation duquel un câble est prévu pour relier un adaptateur fixe à un connecteur USB intégré à un ordinateur d'accueil.

Dans cet état de la technique, on décrit une solution au problème de la connexion et de la déconnexion d'un appareil portable à un ou plusieurs dispositifs externes qui servent à la fois d'entrée ou de sortie selon les circonstances.

Dans le mode de réalisation visé dans cet état de la technique, un connecteur est utilisé et comporte un boîtier et une pluralité de contacts dans le boîtier.

Un premier jeu de contacts est approprié pour une transmission Firewire et un second jeu de contacts est approprié pour une transmission de type USB.

Dans cet état de la technique, le connecteur est disposé sur un câble et relie une station d'accueil de type « Docking Station » à un ordinateur d'accueil et, ce dispositif, bien qu'il permette la conversion de type de connexion entre USB et Firewire, est soumis aux mêmes inconvénients lors de l'utilisation de l'appareil nomade que ceux des autres états de la technique précités.

Il en résulte un certain nombre d'inconvénients d'utilisation auxquels la présente invention apporte remède.

En effet, la présente invention concerne un sabot d'adaptation pour appareils électroniques nomades, du genre dans lequel l'appareil mobile comporte un connecteur, comme un connecteur USB, et dans lequel le sabot comporte un connecteur pour venir s'engager dans le connecteur de l'appareil mobile et un connecteur destiné à recevoir une connexion, ou un câble, à un ordinateur, ou station d'accueil.

Enfin, le sabot comporte des moyens de fixation permanente amovible sur le téléphone ou l'appareil mobile.

Le sabot comporte des parois latérales et au moins une paroi horizontale destinée à solidariser de manière permanente et amovible le sabot à une partie convenable de l'appareil portable électronique associé.

Le sabot comporte au moins un décrochement destiné à permettre l'accès à des touches ou organes d'interaction avec l'utilisateur sur l'appareil électronique nomade.

Le sabot comporte des moyens de solidarisation du circuit imprimé moulé dans le boîtier du sabot.

Le boîtier comporte au moins un couvercle destiné à être solidarisé sur les parties de solidarisation du boîtier du sabot proprement dit.

Le sabot comporte au moins un module de fonctionnalité supplémentaire comme :
- une batterie d'accumulateur électrique ;
- un circuit de communication radiofréquence équipé d'une antenne pour une communication de type NFC ;
- un circuit de communication radiofréquence et une antenne adaptée destinés à réaliser une communication de type bluetooth ;
- un module de mémoire flash à connexion série ;
- une application logicielle exécutée sur un processeur de traitement de l'information correspondant de l'appareil électronique nomade de manière à apporter au moins une fonctionnalité supplémentaire à l'appareil électronique nomade.

Le module de fonctionnalité supplémentaire est relié par un moyen de connexion électrique au circuit imprimé surmoulé de manière à communiquer avec l'appareil électronique nomade, d'une part, et/ou la station d'accueil comme un ordinateur portable lorsqu'un câble de connexion est connecté au second connecteur du circuit imprimé surmoulé.

Le connecteur de l'appareil électronique nomade est de type USB min, en ce que le premier connecteur du circuit imprimé surmoulé est de type USB min réciproque et le second connecteur du circuit imprimé surmoulé est un connecteur USB max.

D'autres caractéristiques et avantages de la présente invention seront mieux compris à l'aide de la description et des figures annexées parmi lesquelles :
- la figure 1 est un schéma représentant un système associant un téléphone mobile et un sabot selon l'invention ;
- la figure 2 est une vue en perspective d'un sabot selon un mode particulier de réalisation de la présente invention ;
- la figure 3 représente une vue en coupe d'un sabot selon un mode particulier de réalisation de la présente invention ; et
- la figure 4 est une vue schématique d'un sabot dans un autre mode particulier de réalisation de la présente invention.

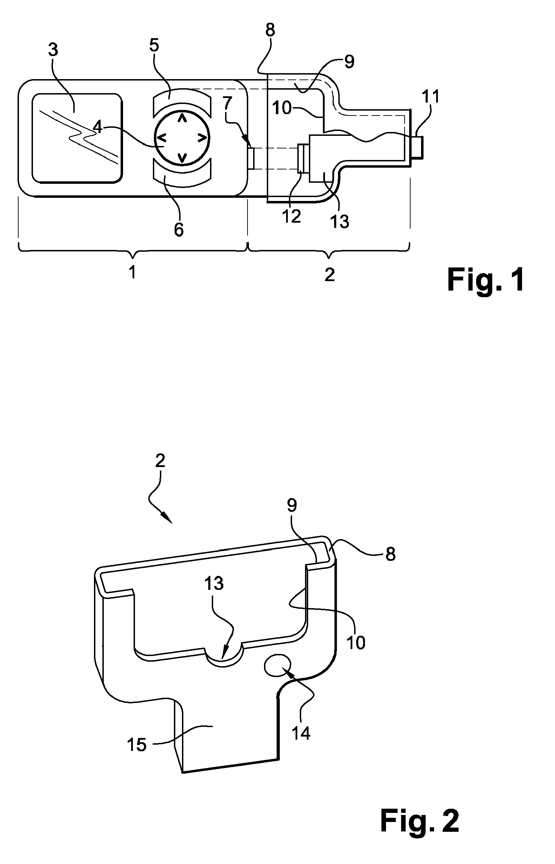

A la figure 1, on a représenté un ensemble constitué d'un téléphone mobile 1, à titre d'appareil électronique nomade, et un sabot selon l'invention qui porte la référence 2.

L'appareil électronique nomade 1 comporte classiquement un écran d'affichage 3, un navigateur ou pavé 4de navigation bidirectionnelle d'un curseur sur l'écran 3 et des touches de fonction latérales de part et d'autre du pavé de navigation 5 et 6.

Enfin, il comporte au moins un connecteur 7 d'un premier genre et qui est dans un mode de réalisation de type « USB min ».

Le connecteur « USB min » 7 présente des dimensions réduites, et de ce fait, présente une fragilité importante.

Le sabot selon le mode de réalisation de l'invention est constitué principalement par un boîtier réalisé en un matériau synthétique, préférentiellement obtenu par moulage en injection, et qui comporte une paroi latérale verticale 8 qui est destinée à venir en contact sur les parois latérales correspondantes du bas de l'appareil électronique nomade, représentées à droite sur la figure 1.

Le sabot 2 comporte aussi au moins un bord 9 dans un plan horizontal relativement à l'appareil électronique nomade venant sur la face supérieure ou avant de l'appareil électronique nomade 1, et sur sa région périphérique, tandis que le boîtier du sabot comporte un fond dans un plan parallèle qui appuie sur la face inférieure ou arrière de l'appareil électronique nomade, de sorte que le sabot lorsqu'il est inséré sur l'appareil électronique nomade 1 est entièrement solidaire de celui-ci. Ceci assure, par un montage serré exigeant un effort d'insertion de la part de l'utilisateur, un moyen de solidarisation permanente du sabot d'adaptation 2 à l'appareil électronique nomade 1. On note ici que le caractère permanent de la solidarisation ne constitue pas une fixation permanente au sens qu'il serait ensuite impossible de retirer l'appareil électronique nomade de son sabot, mais qu'au contraire, il est possible de le retirer du sabot par une action volontaire et qu'il est impossible que de le séparer du sabot de manière involontaire.

A la suite du bord horizontal 9, le sabot présente un décrochement 10 qui est destiné à venir emprisonner la partie basse, représentée à droite sur la figure 1, du téléphone mobile 1 en dessous du navigateur 4.

De la sorte, le décrochement 10 permet à l'utilisateur de conserver l'utilisation des fonctions de la face avant, partie inférieure (représentée à droite sur le téléphone mobile 1 de la figure 1), le bord horizontal 9 et le décrochement 10 maintenant fermement le sabot sur le téléphone mobile 1.

Le sabot 2 comporte ensuite un circuit imprimé 13, réalisé en un matériau surmoulé dans une résine isolante électriquement et donnant de la rigidité au montage. Une première extrémité du circuit imprimé surmoulé, à gauche au dessin, porte un connecteur « USB min » 12 réciproque du connecteur « USB min » 7 sur le portable 1. Sur une seconde extrémité en regard du circuit imprimé 13, un circuit « USB max » 11 d'un autre genre que le genre du premier connecteur 12 et du connecteur 7 qui se correspondent l'un l'autre. Le connecteur « USB max » présente une robustesse accrue par rapport à celle du premier genre « USB min » ce qui participe à la solution du problème technique posée. Par ailleurs, l'adaptation électrique des connexions entre les deux connecteurs est rendue possible par le sabot de l'invention

Dans un mode de réalisation, le circuit imprimé surmoulé 13 comporte une plaque isolante sur une ou deux faces de laquelle sont disposées des pistes conductrices qui y sont disposées de la manière habituelle dans la technique des circuits imprimés. De plus, au moins un connecteur du premier genre 12 et au moins un connecteur d'un second genre 11 sont solidarisés et/ou soudés à l'extrémité de pistes de sorte que les broches à relier du connecteur du premier genre 12 sont électriquement reliées par les pistes conductrices à des broches sélectionnées du connecteur du second genre 11.

Dans certaines applications, le circuit imprimé surmoulé 13 porte aussi des composants électroniques interconnectés sur les pistes. Notamment, il est prévu un arrangement de composants pour réaliser un filtre électrique, un convertisseur de protocole de communication de données.

Dans certains modes de réalisation, il existe plusieurs connecteurs de premiers genres 12 destinés à s'adapter à des connecteurs réciproques sur le téléphone mobile 1, par exemple un connecteur USB et un connecteur électrique. Le circuit imprimé surmoulé 13 est adapté en conséquence.

Dans certains modes de réalisation, il existe plusieurs connecteurs de seconds genres 11, destinés à s'adapter à des câbles distincts vers une ou plusieurs stations électroniques. Le circuit imprimé surmoulé 13 est adapté en conséquence.

Le circuit imprimé 13 est rendu solidaire de l'intérieur du sabot dans une position qui permet l'adaptation du connecteur « USB min » 12 avec le connecteur réciproque « USB min » 7 du téléphone mobile 1 lorsque le sabot 2 est monté sur la partie inférieure (à droite, à la figure 1) du téléphone mobile 1.

Par ailleurs, le montage du circuit imprimé dans le sabot permet de faire ressortir par une ouverture convenable du sabot et représentée à droite à la figure 1 de sorte que le connecteur du second genre « USB max » 11 qui est alors accessible de l'extérieur du sabot 2 pour la connexion à l'aide d'un câble « USB max » à un ordinateur d'accueil (non représentés).

Cependant, en utilisation normale, le sabot est monté en permanence de sorte que le connecteur 7 est toujours protégé parce qu'il est connecté au connecteur « USB min » 12 du circuit imprimé 13.

Lors des connexions/déconnexions avec la station d'accueil, ou ordinateur personnel, l'utilisateur utilise un câble « USB max » (non représenté) qu'il vient engager sur la prise « USB max 11 » accessible sur le sabot.

Lors d'une première utilisation, l'utilisateur du téléphone mobile ou appareil électronique nomade 1 engage le sabot 2 sur la partie latérale, représentée à droite à la figure 1, et qui est en général la partie inférieure du téléphone mobile.

Dans cette position, il n'est plus nécessaire de déconnecter le sabot, mais au contraire, il est préférable de le laisser en permanence connecté sur le téléphone mobile. Par contre, étant simplement monté par frottements, le sabot 2 est toujours amovible du téléphone mobile 1. D'autres modes de montage du sabot de l'invention par exemple par clipage sur une partie saillante de l'appareil électronique nomade sont prévues.

A la figure 2, on a représenté un mode particulier de réalisation du sabot 2 de la figure 1.

On a représenté en perspective la paroi latérale « verticale » 9, ainsi que le décrochement 10.

Le décrochement 10 affecte une forme sensiblement rectangulaire dont la partie basse horizontale à la figure 2, comporte un décrochement sensiblement circulaire 13 qui permet en particulier de dégager le bas du navigateur 4 lorsque le sabot est engagé sur le téléphone mobile 1 de la figure 1.

De même, selon les modèles d'appareils électroniques nomade 1, il est prévu, dans le cas où le bas de l'appareil nomade 1 comporte un ou plusieurs points lumineux, des perçages, comme le perçage 14, qui permettent de visualiser l'état de ces points lumineux ou diodes électroluminescente.

De même, dans d'autres modes de réalisation, le sabot 2 comporte aussi des découpes dans son boîtier 8-10 qui permettent l'accès par exemple à une touche de fonction, ou à un autre connecteur de façon à permettre une parfaite utilisation de l'appareil portable 1 lorsqu'il est monté dans le sabot.

On a aussi représenté par la référence 15 une partie moulée qui vient de matière sur le boîtier 8-10 et à l'intérieur de laquelle est rendu solidaire le circuit imprimé 13 représenté à la figure 1 dans une position permettant la connexion du connecteur « USB min » de l'appareil électronique nomade 1 avec le connecteur « USB min » réciproque 12 du circuit imprimé 13.

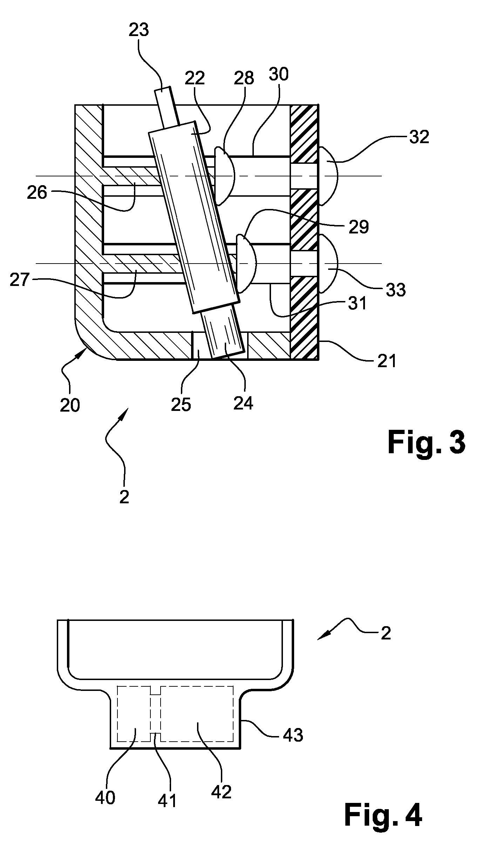

Dans un autre mode de réalisation, représenté à la figure 3, le sabot 2, notamment dans la partie 15 représentée à la figure 2, et représentée en coupe dans le schéma de la figure 3, comporte une partie de boîtier 20 à l'intérieur de laquelle est pratiquée une fente, ou ouverture 25 à travers laquelle le connecteur « USB max » 24 du circuit imprimé 22 peut passer de façon à permettre son accès de connexion par un câble « USB max ».

Le circuit imprimé 22 peut être monté sur deux picots 26 et 27 percés d'alésage pour recevoir deux vis 28 et 29 de fixation qui permettent de disposer le circuit imprimé 22 dans une position angulaire permettant son insertion facile sur le connecteur « USB min » 7 de l'appareil mobile ou portable 1 de la figure 1.

En effet, de nombreux appareils électriques nomades présentent un connecteur de type « USB min » avec une angulation déterminée par rapport au plan de la face avant.

Les deux picots 26 et 27 sont configurés de manière à assurer une orientation angulaire, ainsi qu'un positionnement dans le plan correspondant sur le sabot.

Dans le mode de réalisation de la figure 3, la partie 20 du boîtier du sabot est fermée par un couvercle 21 qui est monté sur deux picots 30 et 31. Le couvercle 21 est par exemple réalisé dans le même matériau que la partie de boîtier 20. Des vis 32 et 31 sont engagées sur les picots 30 et 31 pour solidariser le boîtier 21 sur le sabot proprement dit.

De la sorte, il est possible d'accéder notamment au circuit imprimé même lorsque le sabot 2 est monté sur le téléphone mobile, par exemple, pour accéder au circuit imprimé.

A la figure 4, on a représenté un schéma d'un sabot 2 dans un autre mode de réalisation de la présente invention.

Le sabot 2 présente une partie inférieure 43 dans laquelle sont disposés :
- un circuit imprimé surmoulé 40 portant les deux connecteurs, comme les connecteurs 12 et 11 de la figure 1 ou 23 et 24 de la figure 2 ; et le cas échéant
- un module de fonctionnalité supplémentaire 42 destiné à apporter une fonction électronique supplémentaire au sabot ; et le cas échéant,
- une connexion électrique 41 permettant de connecter le module de fonctionnalité supplémentaire 42 au circuit imprimé surmoulé 40.

Dans un mode particulier de réalisation, le module de fonctionnalité supplémentaire 42 est constitué par une batterie d'accumulateurs électriques et la liaison électrique 41 est constituée par deux conducteurs connectant les polarités convenables de l'accumulateur au circuit imprimé surmoulé 40.

Dans ce mode de réalisation, le circuit imprimé surmoulé 40 comporte des pistes conductrices qui permettent de relier les broches d'alimentation électrique correspondantes des deux connecteurs respectivement « USB min » et « USB max » du circuit imprimé surmoulé 40 aux polarités convenables du module de fonctionnalité supplémentaire constitué d'un accumulateur.

Dans cette situation, lorsque le connecteur « USB max » du circuit imprimé surmoulé 40 est connecté par un câble convenable à une station d'accueil comme un ordinateur portable, il est possible de recharger à la fois la batterie de l'appareil électronique nomade 1 auquel le sabot est déjà connecté, mais aussi la batterie d'accumulateur 42 de sorte que l'autonomie de l'appareil électronique nomade 1 est augmenté par l'utilisation du module de fonctionnalité supplémentaire 42.

Dans d'autres modes de réalisation, le module 42 est constitué, ou comporte :
- un circuit équipé d'une antenne radiofréquence permettant d'ajouter une fonction NFC (Near Field Communication) à un appareil électronique nomade 1 qui n'en est pas encore doté ;
- un circuit radiofréquence équipé d'une antenne convenable pour une connexion bluetooth (marque déposée) pour ajouter une fonction de communication bluetooth (marque déposée) à l'appareil électronique nomade 1 qui n'en serait pas équipé ;
- un module de mémoire flash à connexion série pour ajouter un volume de mémoire de masse ou de programme à un appareil électronique portable 1 qui n'en serait pas encore doté.

Dans ce cas, l'appareil électronique nomade 1 doit être chargé par une application logicielle qui est exécutée par le processeur embarqué par l'appareil électronique nomade 1 de façon à gérer les fonctionnalités supplémentaires destinées notamment à être utilisées lorsque le sabot est monté sur l'appareil électronique nomade, d'une part, et qu'il n'est pas nécessairement connecté à un ordinateur personnel, d'autre part.

Grâce au sabot de l'invention qui reste en permanence couplé à l'appareil électronique portable ou mobile 1, il est possible d'enrichir les fonctionnalités d'un appareil électronique nomade.

## Revendications

1. Sabot de connexion à un appareil électronique nomade, **caractérisé en ce qu'**il comporte
- un boîtier (8-10) doté de moyens pour le rendre solidaire de manière permanente et amovible audit appareil électronique nomade ;
- un circuit imprimé surmoulé (13 ; 22) comportant au moins un connecteur d'un premier genre (12 ; 23) destiné à venir s'engager dans un connecteur existant de l'appareil électronique nomade et au moins un connecteur d'un second genre (11 ; 24) accessible de l'extérieur du sabot à un câble de connexion convenable avec un appareil d'accueil comme un ordinateur personnel.

2. Sabot selon la revendication 1, **caractérisé en ce que** le sabot comporte les parois latérales (8) et au moins une paroi horizontale (9) destinée à solidariser de manière permanente et amovible le sabot à une partie convenable de l'appareil électronique nomade associé (1).

3. Sabot selon l'une des revendications précédentes, **caractérisé en ce qu'**il comporte au moins un décrochement (10, 13) destiné à permettre l'accès à des touches ou organes d'interaction avec l'utilisateur sur l'appareil électronique nomade (1).

4. Sabot selon l'une quelconque des revendications précédentes, **caractérisé en ce qu'**il comporte des moyens de solidarisation (26, 27, 28, 29) du circuit imprimé moulé (22) dans le boîtier du sabot.

5. Sabot selon l'une quelconques des revendications précédentes, **caractérisé en ce que** le boîtier comporte au moins un couvercle (21) destiné à être solidarisé (32, 33) sur les parties de solidarisation (30, 31) du boîtier du sabot proprement dit.

6. Sabot selon l'une quelconques des revendications précédentes, **caractérisé en ce qu'**il comporte au moins un module de fonctionnalité supplémentaire (42) comme :
- une batterie d'accumulateur électrique ;
- un circuit radiofréquence équipé d'une antenne pour une communication de type NFC ;
- un circuit de communication radiofréquence et une antenne adaptée destinés à réaliser une communication de type Bluetooth ® ;
- un module de mémoire flash à connexion série ;
- une application logicielle exécutée sur un processeur de traitement de l'information correspondant de l'appareil électronique nomade (1) ;
de manière à apporter au moins une fonctionnalité supplémentaire à l'appareil électronique nomade.

7. Sabot selon la revendication précédente, **caractérisé en ce que** le module de fonctionnalité supplémentaire (42) est relié par un moyen de connexion électrique (41) au circuit imprimé surmoulé (40) de manière à communiquer avec l'appareil électronique nomade (1), d'une part, et/ou la station d'accueil comme un ordinateur portable lorsqu'un câble de connexion est connecté au second connecteur du circuit imprimé surmoulé (40).

8. Sabot selon l'une quelconque des revendications précédentes, **caractérisé en ce que** le connecteur (7) de l'appareil électronique nomade (1) est de type USB min, **en ce que** le premier connecteur du circuit imprimé surmoulé (13 ; 22 ; 40) est de type USB min réciproque et le second connecteur du circuit imprimé surmoulé est un connecteur USB max.
